# EUROPÄISCHE PATENTANMELDUNG

(11) **EP 4 053 437 A1**
(43) Veröffentlichungstag der Anmeldung: **07.09.2022**
(21) Anmeldenummer: 22158975.7
(22) Anmeldetag: 25.02.2022
(51) Int. Cl.: F16K 1/38

(54) **VENTILVORRICHTUNG FÜR EINE VERPACKUNGSMASCHINE**

(30) Priorität: 04.03.2021 DE 102021105175
(71) Anmelder: MULTIVAC Sepp Haggenmüller SE & Co. KG, 87787 Wolfertschwenden (DE)
(72) Erfinder: GABLER, Albert, 87760 Lachen-Albishofen (DE); KROPF, Markus, 87437 Kempten (DE)
(74) Vertreter: Grünecker Patent- und Rechtsanwälte PartG mbB

(57) **Zusammenfassung**

Eine Ventilvorrichtung (17) mit einem Ventilkörper (19), einem den Ventilkörper (19) durchdringenden Strömungskanal (20) und einem im Strömungskanal (20) angeordneten Dichtkörper (21), wobei der Strömungskanal (20) ausgehend vom Dichtkörper (21) ein eine Axialrichtung (26) definierenden Abströmabschnitt (24) aufweist, zeichnet sich dadurch aus, dass der Dichtkörper (21) parallel zur Axialrichtung (26) verstellbar ist zwischen einer den Strömungskanal (20) abdichtenden Schließstellung (S) und einer den Strömungskanal (20) zumindest teilweise freigebenden Offenstellung (O), dass der Abströmabschnitt (24) des Strömungskanals (20) einen zumindest im Wesentlichen zylindrischen Teilabschnitt (25) aufweist, und dass der Dichtkörper (21) einen Zylinderabschnitt (35) mit einer zumindest im Wesentlichen zylindrischen Form aufweist, der dazu konfiguriert ist, in der Schließstellung (S) des Dichtkörpers (21) in den zylindrischen Teilabschnitt (25) des Abströmabschnitts (24) hineinzuragen. Offenbart ist auch ein Verfahren zum Regeln eines Drucks in einer Verpackungsmaschine mittels einer solchen Ventilvorrichtung.

## Beschreibung

Die Erfindung bezieht sich auf eine Ventilvorrichtung gemäß dem Oberbegriff von Anspruch 1, insbesondere für den Einsatz in einer Verpackungsmaschine, sowie auf ein Verfahren zum Regeln eines Drucks in einer Verpackungsmaschine.

Eine gattungsgemäße Ventilvorrichtung geht aus der DE 10 2008 039 200 A1 hervor. Dort ist ein Dichtkörper im Wesentlichen orthogonal zu einem den Ventilkörper durchdringenden Strömungskanal bewegbar. Der Dichtkörper hat einen keilförmigen Kopf, während eine Dichtfläche des Ventilkörpers mit dem Verstellweg des Dichtkörpers einen spitzen Winkel einschließt. Nachteilig an dem herkömmlichen Vakuumventil ist, dass es im Betrieb zu einem schlagartigen *"Losreißen"* des Dichtkörpers vom Ventilkörper und entsprechenden schlagartigen Druckveränderungen kommen kann. Das Vakuumventil der DE 10 2008 039 200 A1 ist insbesondere für den Einsatz in Tiefziehverpackungsmaschinen vorgesehen.

Eine Verpackungsmaschine mit einer Druckregelvorrichtung geht aus der DE 10 2018 100 224 A1 hervor. Die Druckregelvorrichtung umfasst dort zwei 2/2-Wege-Ventile zum Einstellen eines Evakuierungs- und/oder Begasungsdrucks in der Verpackungsmaschine.

Die Aufgabe der vorliegenden Erfindung liegt darin, eine Ventilvorrichtung und ein Verfahren zum Regeln eines Drucks in einer Verpackungsmaschine hinsichtlich der Präzision einer Druckregelung zu verbessern. Gelöst wird diese Aufgabe durch eine Ventilvorrichtung mit den Merkmalen des Anspruchs 1 bzw. durch ein Verfahren mit den Merkmalen des Anspruchs 11. Vorteilhafte Weiterbildungen der Erfindung sind Gegenstand der abhängigen Ansprüche.

Im Gegensatz zur DE 10 2008 039 200 A1 ist der Dichtkörper bei der Erfindung nicht senkrecht, sondern parallel zur Axialrichtung des Abströmabschnitts des Strömungskanals verstellbar. Mit *"Abströmabschnitt"* ist dabei derjenige Teil des Strömungskanals gemeint, der ausgehend vom Dichtkörper zu einer Vakuumquelle führt. Darüber hinaus verfügt der Dichtkörper bei der Erfindung über einen Zylinderabschnitt mit einer zumindest im Wesentlichen zylindrischen Form, der dazu konfiguriert ist, in der Schließstellung des Dichtkörpers in den zylindrischen Teilabschnitt des Abströmabschnitts hineinzuragen. Die Axialrichtung kann im Kontext der Erfindung (auch des Verfahrens) auch durch einen vergleichsweise kurzen Abschnitt des Abströmabschnitts definiert sein, insbesondere durch dessen zylindrischen Teilabschnitt.

Diese Maßnahmen führen gemeinsam dazu, dass sich das Öffnungsverhalten der Ventilvorrichtung erheblich verändert. Die erfindungsgemäße Ventilvorrichtung erlaubt es, dass der Zylinderabschnitt des Dichtkörpers zumindest zeitweise weiter im zylindrischen Teilabschnitt des Abströmabschnitts geführt bleibt, wenn auch mit Spiel oder unter Bildung eines Spaltes zwischen Dichtkörper und Abströmabschnitt, der eine begrenzte Fluidströmung zulässt, während die Ventilvorrichtung mit dem Öffnen des Ventils beginnt. Anders ausgedrückt: In demjenigen Moment, in dem sich der Ventilkörper ausgehend von der abdichtenden Schließstellung von einem Dichtsitz löst, ist der Zylinderabschnitt des Dichtkörpers weiterhin im Abströmabschnitt geführt. Trotz des im Abströmabschnitt anliegenden Unterdrucks verhindert diese begrenzte Fluidströmung, dass der Dichtkörper beim Lösen aus der Schließstellung schlagartig ausbricht, sobald zumindest auf einer Seite des Dichtkörpers eine Strömung am Dichtkörper entlangströmen kann. Das Verhindern des schlagartigen Lösens des Dichtkörpers wiederum verhindert schlagartige Änderungen im Druckverlauf und erlaubt so eine sanftere, erheblich präzisere Steuerung des Drucks im Vergleich zu herkömmlichen Ventilvorrichtungen.

Vorzugsweise weist der Abströmabschnitt des Strömungskanals einen kegelförmigen Dichtabschnitt auf und der Dichtkörper weist seinerseits einen Kegelabschnitt auf, der dazu konfiguriert ist, in der Schließstellung des Dichtkörpers am kegelförmigen Dichtabschnitt des Strömungskanals anzuliegen. Auf diese Weise kann eine besonders gute Abdichtung sichergestellt werden.

In einer vorteilhaften Variante weist der Dichtkörper an einem distalen Ende eine Regelkontur auf. Mit *"distalem Ende"* ist dasjenige Ende gemeint, das von einem Lagerbereich des Dichtkörpers abgewandt ist. Eine Regelkontur zeichnet sich dadurch aus, dass sie zumindest über einen gewissen Bewegungsbereich des Dichtkörpers eine zumindest weitgehend stetige Änderung der Öffnungsweite des Strömungskanals ermöglicht. Dies begünstigt die Präzision im Einstellen eines bestimmten Druckwerts und/oder einen sanften Übergang zwischen zwei verschiedenen Druckwerten weiter.

Die Regelkontur kann sich zwischen dem Zylinderabschnitt des Dichtkörpers und einem Scheitel des Dichtkörpers befinden. Es kann sich um den Bereich des Dichtkörpers handeln, an dem dieser am Weitesten in den Abströmabschnitt des Strömungskanals hineinragt.

Als besonders wirkungsvoll hat es sich herausgestellt, wenn die Regelkontur vom Zylinderabschnitt hin zu einem Scheitel des Dichtkörpers konvergiert. Denkbar sind dabei eine kegelförmige oder alternativ eine abgerundete Regelkontur. Zu abgerundeten Regelkonturen gehören solche mit einem halbkreisförmigen, kreisabschnittförmigen oder parabelförmigen Querschnitt, oder auch ein Querschnitt entsprechend einem gotischen Spitzbogen oder konkave Formen.

Vorzugsweise ist der Dichtkörper in seine Schließstellung vorgespannt, um insbesondere aus Sicherheitsgründen in einem stromlosen Zustand ein Schließen des Strömungskanals zu bewirken.

Für das Vorspannen kann zweckmäßig eine Feder vorgesehen sein, die den Dichtkörper in seine Schließstellung vorspannt.

Vor allem im Zusammenhang mit einer Vorspannung des Dichtkörpers kann ein einfachwirkender Aktuator, vorzugsweise ein pneumatischer Aktuator, zum Bewegen des Dichtkörpers in seine Offenstellung genügen und vorgesehen sein. Dies erleichtert die Konstruktion im Vergleich zu einem doppelt wirkenden Aktuator.

Die erfindungsgemäße Ventilvorrichtung ist mit besonderem Vorteil einsetzbar in einer Verpackungsmaschine, insbesondere einer Tiefziehverpackungsmaschine, einer Kammermaschine, einer Kammerbandmaschine oder einer Schalenverschließmaschine (Traysealer). Mittels der Ventilvorrichtung kann beispielsweise das Evakuieren und/oder das Begasen eines Innenraums einer Kammer in der Verpackungsmaschine gesteuert werden.

Die Erfindung bezieht sich auch auf ein Verfahren zum Regeln eines Drucks in einer Verpackungsmaschine mittels einer Ventilvorrichtung, wobei die Ventilvorrichtung einen Ventilkörper, einen den Ventilkörper durchdringenden Strömungskanal und einen im Strömungskanal angeordneten Dichtkörper umfasst, wobei der Strömungskanal ausgehend vom Dichtkörper einen eine Axialrichtung definierenden Abströmabschnitt aufweist. Das Verfahren zeichnet sich dadurch aus, dass der Dichtkörper in Axialrichtung aus einer Schließstellung des Dichtkörpers heraus verstellt wird, wobei ein Zylinderabschnitt des Dichtkörpers mit einer zumindest im Wesentlichen zylindrischen Form in einem zylindrischen Teil des Abströmabschnitts geführt wird, ggf. mit Spiel oder unter Bildung eines Spalts, s.o. Insbesondere kann diese Führung erfolgen, während sich der Dichtkörper aus einem Dichtsitz löst, mit den oben erläuterten Vorteilen.

Vorzugsweise wird der Zylinderabschnitt des Dichtkörpers in dem zylindrischen Teilabschnitt des Abströmabschnitts geführt, während sich ein Kegelabschnitt des Dichtkörpers, der in der Schließstellung des Dichtkörpers an einem kegelförmigen Dichtabschnitts des Strömungskanals anliegt, von dem Dichtabschnitt des Strömungskanals löst. Die Führung des Dichtkörpers verhindert das Auftreten eines schlagartigen, seitlichen Versetzens oder Verkippens des Dichtkörpers mit entsprechend heftigen, schlagartigen Druckänderungen.

Bevorzugt ist eine Vakuumquelle mit dem Abströmabschnitt derart fluidverbunden, dass sie einen Unterdruck im Abströmabschnitt des Strömungskanals erzeugt. Dies begünstigt einen sicher abdichtenden Sitz des Dichtkörpers in seiner Schließstellung, während die erfindungsgemäße Konstruktion des Dichtkörpers und des Ventilkörpers ein präzises, schlagfreies Öffnen der Ventilvorrichtung ermöglicht.

In einer Weiterbildung der Erfindung kann der Dichtkörper schrittweise oder stufenweise zwischen seiner Schließstellung und einer Offenstellung bewegt werden. Je kleiner die Stufen sind, desto präziser ist die Druckregelung.

Vorzugsweise kann eine schrittweise oder stufenweise Bewegung des Dichtkörpers zwischen seiner Schließstellung und einer Offenstellung durch schrittweises und/oder getaktetes Zuführen definierter Fluidmengen von einer Fluidquelle in eine Kolbenkammer eines Aktuators zum Verstellen des Dichtkörpers erzielt werden.

Im Folgenden wird ein vorteilhaftes Ausführungsbeispiel der Erfindung anhand von Zeichnungen näher erläutert. Im Einzelnen zeigen:
- Fig. 1: eine schematische Perspektivansicht einer Verpackungsmaschine,
- Fig. 2: eine Draufsicht auf eine erfindungsgemäße Ventilvorrichtung in einer Schließstellung,
- Fig. 3: eine Seitenansicht der Ventilvorrichtung in der Schließstellung,
- Fig. 4 und 5: verschiedene Zustände während eines Übergangs von der Schließstellung zu einer Offenstellung,
- Fig. 6: die Ventilvorrichtung in ihrer Offenstellung und
- Fig. 7: ein zweites Ausführungsbeispiel eines Dichtkörpers.

Gleiche Komponenten sind in den Figuren durchgängig mit den gleichen Bezugszeichen versehen.

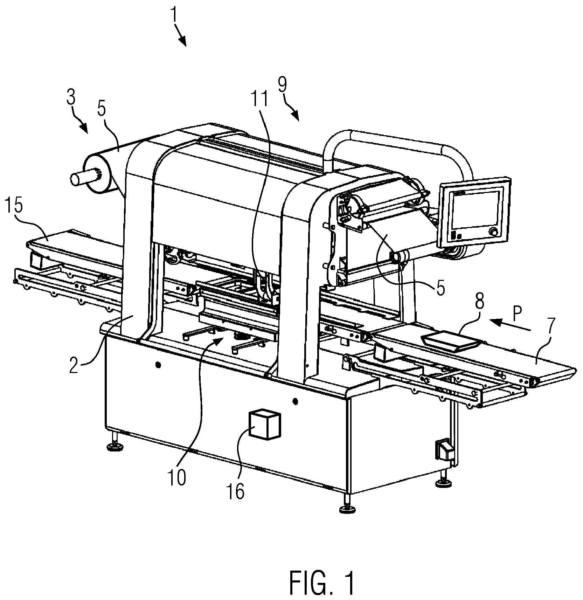

Fig. 1 zeigt ein Ausführungsbeispiel einer Verpackungsmaschine 1, die, wie im vorliegenden Beispiel, eine Schalenverschließmaschine sein kann. Sie kann ein Gestell 2 umfassen. Die Verpackungsmaschine 1 kann des Weiteren ein Zuführband 7 aufweisen, sie kann außerdem eine Verschließstation 9 aufweisen. Durch das Zuführband 7 können befüllte, aber zu diesem Zeitpunkt noch unverschlossene Schalen 8 zu der Verschließstation 9 befördert werden. Die Schalen können optional mittels einer Greifereinrichtung 11 in einer Produktionsrichtung P in die Verschließstation 9 umgesetzt werden und dort mit einer von oben zugeführten Deckelfolie 5 verschlossen werden, beispielsweise durch Ansiegeln der Deckelfolie 5 an die Schalen 8. Zu diesem Zweck kann die Verschließstation 9 ein Siegelwerkzeug 10 umfassen. Versiegelte und fertiggestellte Verpackungen können über die Greifereinrichtung 11 aus der Verschließstation 9 auf ein Abführband 15 umgesetzt werden.

Nach dem Ansiegeln der Deckelfolie 5 können den Verpackungen bzw. Verpackungsverbünden entsprechende Bereiche der Deckelfolie 5 in der Verschließstation 9 aus der Bahn der Deckelfolie 5 ausgeschnitten werden. Es verbleibt ein Folienrestgitter der Deckelfolie 5, welches mit einer Vorrichtung 3 zum Aufwickeln der Folie 5 aufgewickelt wird.

Alternativ kann eine Verpackungsmaschine 1 vom Typ einer Tiefziehverpackungsmaschine, einer Kammermaschine oder einer Kammerbandmaschine konfiguriert sein.

Die Verpackungsmaschine 1 verfügt über eine Vakuumquelle 16, mittels derer in einer Kammer 18 der Verschließstation 9 vor dem Versiegeln der Deckelfolie 5 mit den Schalen 8 ein Vakuum bzw. Unterdruck erzeugt wird. Zusätzlich kann eine Begasungsvorrichtung (nicht gezeigt) vorgesehen sein.

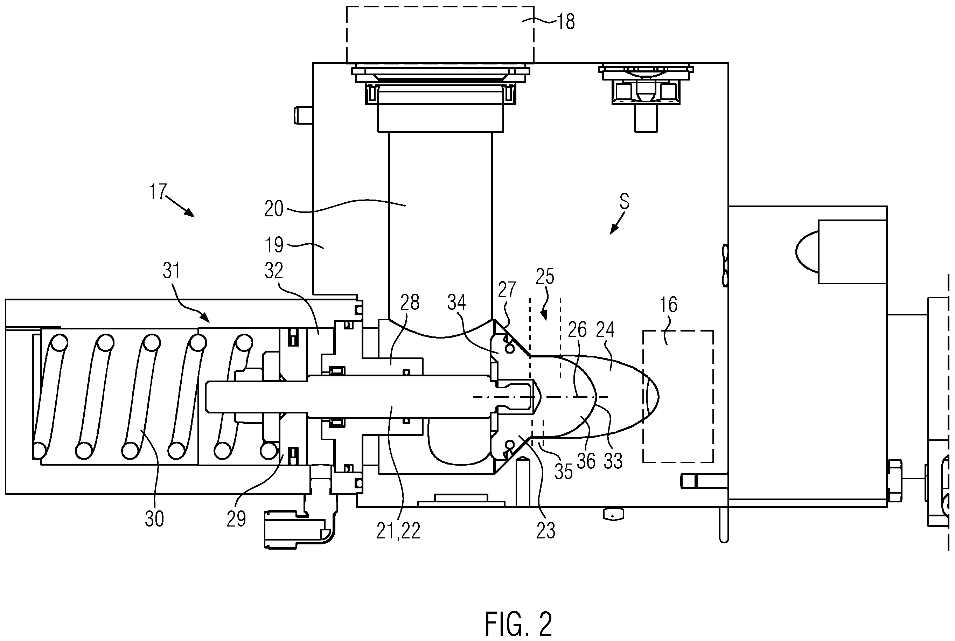

Fig. 2 zeigt die Draufsicht auf eine erfindungsgemäße Ventilvorrichtung 17, die funktionsmäßig zwischen der (schematisch angedeuteten) Kammer 18 der Verschließstation 9 und der Vakuumquelle 16 angeordnet ist. Die Ventilvorrichtung 17 weist einen Ventilkörper 19 auf, der von einem Strömungskanal 20 durchdrungen wird. Der Strömungskanal 20 stellt damit eine Fluidverbindung zwischen Vakuumquelle 16 und Kammer 18 dar, wenn sich die Ventilvorrichtung 17 in einer Offenstellung befindet.

Im Ventilkörper 19 ist ein Dichtkörper 21 aufgenommen. Der Dichtkörper 21 umfasst einen Stößel 22 und einen mit dem Stößel 22 fest verbundenen, beispielsweise verschraubten, Kopf 23.

Ein zwischen dem Dichtkörper 21 der Ventilvorrichtung 17 und der Vakuumquelle 16 liegender Abschnitt des Strömungskanals 20 wird als "Abströmabschnitt 24" bezeichnet. Denn über diesen Abströmabschnitt 24 strömt das aus der Kammer 18 abgesaugte Fluid (beispielsweise Luft) ausgehend vom Dichtkörper 21, in Richtung zur Vakuumquelle 16 ab.

Der Abströmabschnitt 24 des Strömungskanals 20 weist einen zylindrischen Teilabschnitt 25 auf. In diesem zylindrischen Teilabschnitt 25 hat der Abströmabschnitt 24 einen konstanten, vorzugsweise kreisförmigen Querschnitt, und definiert eine Axialrichtung 26 des Abströmabschnitts 24. Die Axialrichtung 26 ist unabhängig davon, mit welchem (ggf. gekrümmten) Verlauf der Abströmabschnitt 24 jenseits des zylindrischen Teilabschnitts 25 in Richtung zur Vakuumquelle 16 verläuft. Auf der von der Vakuumquelle 16 abgewandten Seite des Strömungskanals 20 befindet sich ein kegelförmiger Dichtabschnitt 27 des Strömungskanals 20.

Der Stößel 22 des Dichtkörpers 21 ist in einem Lager 28 geführt und gelagert, etwa in einem mittigen Bereich des Stößels 22. Eine Kolbenplatte 29 ist mit dem Stößel 22 verbunden oder einstückig mit ihm ausgebildet. Eine Feder 30, hier eine Schraubenfeder 30, greift an der Kolbenplatte 29 an und spannt den Dichtkörper 21 in seine in Fig. 2 eingenommene Schließstellung S vor.

Ein im vorliegenden Beispiel einfachwirkender Aktuator 31 dient dazu, den Dichtkörper 21 aus seiner Schließstellung S gegen die Kraft der Feder 30 herauszubewegen. Zu diesem Zweck verfügt der Aktuator 31 über eine Kolbenkammer 32, die zwischen dem Lager 28 und der Kolbenplatte 29 angeordnet ist. Wird die Kolbenkammer 32 mit einem unter Druck stehenden Fluid gefüllt, beispielsweise Druckluft, bewegen sich die Kolbenplatte 29 und der mit ihr verbundene Stößel 22 entgegen der Kraft der Feder 30 nach links. Eine Verstellrichtung des Dichtkörpers 21 ist dabei parallel zur Axialrichtung 26 des Abströmabschnitts 24. Anstelle eines einfachwirkenden Aktuators 31 und einer Feder 30 kann auch ein doppeltwirkender Aktuator eingesetzt werden.

An einem distalen, in der Schließstellung S in den Abströmkanal 24 hineinragenden Ende 33 des Dichtkörpers 21 befindet sich der Kopf 23 des Dichtkörpers 21. Dieser ist mit dem Stößel 22 verbunden. Der Kopf 23 kann, wie im vorliegenden Ausführungsbeispiel gezeigt, über im Wesentlichen drei verschiedene Abschnitte verfügen. Ein Kegelabschnitt 34 des Kopfes 23 ist in seiner Form und Dimension komplementär zum kegelförmigen Dichtabschnitt 27 des Strömungskanals 20. Die Schließstellung S des Dichtkörpers 21 zeichnet sich dadurch aus, dass der Kegelabschnitt 34 des Dichtkörpers 21 abdichtend am kegelförmigen Dichtabschnitt 27 anliegt. Die durch die Feder 30 ausgeübte Vorspannung drückt den Kegelabschnitt 34 gegen den kegelförmigen Dichtabschnitt 27.

Des Weiteren weist der Kopf 23 einen Zylinderabschnitt 35 auf. Der Zylinderabschnitt 35 hat einen Querschnitt, der im Wesentlichen demjenigen des zylindrischen Teilabschnitts 25 des Abströmabschnitts 24 entspricht und eventuell minimal (z.B. im Bereich von 1 bis 5 Zehntelmillimeter) kleiner ist als der Innendurchmesser des zylindrischen Teilabschnitts 25. Der Zylinderabschnitt 35 kann eine Länge von beispielsweise 2 bis 12 mm aufweisen.

Benachbart zum Zylinderabschnitt 35 befindet sich am distalen Ende 33 des Kopfes 23 eine Regelkontur 36. Die Regelkontur 36 zeichnet sich durch eine sich zum distalen Ende 33 allmählich verringerte Breite aus. Im dargestellten Ausführungsbeispiel hat die Regelkontur 33 eine abgerundete, etwa parabel- oder halbkreisförmige, konvexe Kontur. Die Regelkontur 33 konvergiert zu einem Scheitel 39

Der Kopf 23 des Dichtkörpers 21 ist im vorliegenden Ausführungsbeispiel einstückig ausgebildet, beispielsweise aus einem Metall, z.B. Edelstahl. Eine mehrteilige Ausbildung wäre jedoch ebenfalls denkbar. Um eine erhöhte Dichtwirkung zu erzielen, könnten die Oberflächen des Kegelabschnitts 34 und/oder des Dichtabschnitts 27 mit einem elastischen Material wie einer Beschichtung versehen werden, beispielsweise umfassend Gummi oder Silikon.

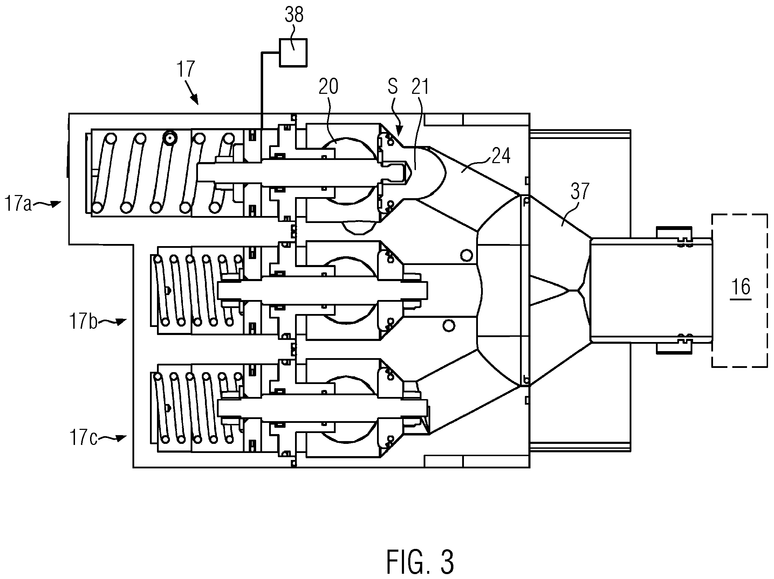

Fig. 3 zeigt eine Seitenansicht der Ventilvorrichtung 17. Zu erkennen ist, dass die Ventilvorrichtung 17 drei übereinander angeordnete Ventile 17a, 17b, 17c aufweist, von denen hier lediglich das oberste 17a in der erfindungsgemäßen Weise mit einem Zylinderabschnitt 35 des Dichtkörpers 21 ausgestattet ist. Denkbar wäre es jedoch auch, die Ventilvorrichtung 17 mit lediglich einem einzigen Ventil, mit zwei Ventilen oder mit mehr als drei Ventilen auszubilden, und eine beliebige Anzahl der vorhandenen Einzelventile in der erfindungsgemäßen Weise zu konfigurieren.

Im Ausführungsbeispiel nach Fig. 3 werden die Abströmkanäle 24 aller drei einzelnen Ventile 17a, 17b, 17c über eine Mannigfaltigkeit 37 zusammengeführt und zur Vakuumquelle 16 geleitet. Dargestellt ist außerdem schematisch eine Fluidquelle 38 (beispielsweise ein Ventil) zum Versorgen der Kolbenkammer 32 des Aktuators 31 mit unter Druck stehendem Fluid. In Fig. 3 befinden sich alle drei Ventile 17a, 17b, 17c in ihrer Schließstellung S.

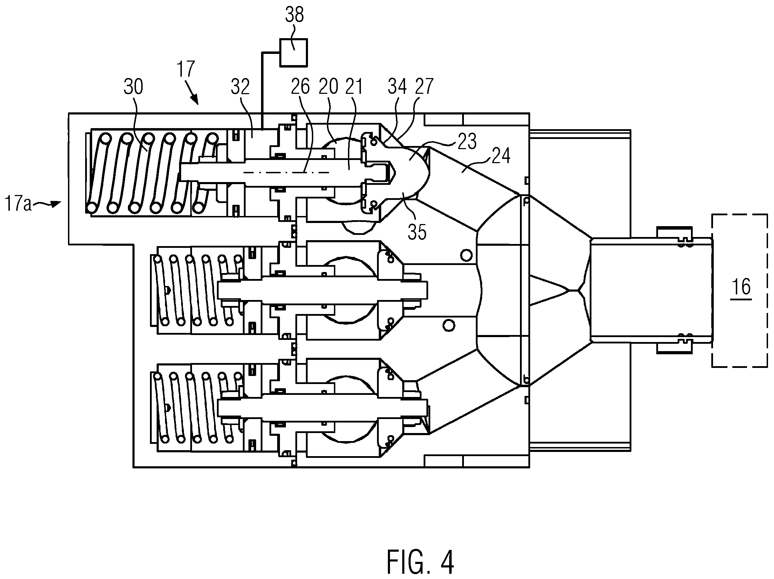

Die Figuren 4 bis 6 zeigen verschiedene Zustände der Ventilvorrichtung 17 beim Bewegen des Dichtkörpers 21 aus der Schließstellung S heraus. Betrachtet wird hier jeweils nur eine Bewegung des ersten Ventils 17a der Ventilvorrichtung 17.

In Fig. 4 ist unter Druck stehendes Fluid aus der Fluidquelle 38 in die Kolbenkammer 32 des Aktuators 31 eingeleitet worden. Der Druck in der Kammer 32 übersteigt die Kraft der Feder 30, so dass die Kolbenplatte 29 und mit ihr der gesamte Dichtkörper 21 parallel zur Axialrichtung 26 nach links verstellt werden.

In der Schließstellung S (siehe Fig. 3) liegt am distalen Ende 33 des Dichtkörpers 21 der von der Vakuumquelle 16 erzeugte Unterdruck an und erzeugt eine gleichwirkend mit der Kraft der Feder 30 wirkende Kraft auf den Dichtkörper 21. Die in Fig. 4 gezeigte Verstellung des Dichtkörpers 21 nach links bewirkt, dass sich der Kegelabschnitt 34 des Dichtkörpers 21 von dem Dichtabschnitt 27 des Strömungskanals 20 löst. Damit entsteht eine Fluidströmung am Kopf 23 des Dichtkörpers 21 entlang durch den Strömungskanal 20. Bei der in Fig. 4 gezeigten Situation hat sich der Dichtkörper 21 ausgehend von der Schließstellung S um beispielsweise 2 bis 6 mm nach links bewegt. Während dieses Verstellweges bleibt der Zylinderabschnitt 35 des Kopfes 23 im zylindrischen Teilabschnitt 25 des Abströmabschnitts 24 geführt. Dieser Umstand verhindert, dass der Dichtkörper 21 seitlich ausbrechen oder um das Lager 28 verkippen kann, wenn der Dichtkörper 21 die Schließstellung S verlässt und sich eine Fluidströmung am Kopf 23 entlang ausbildet.

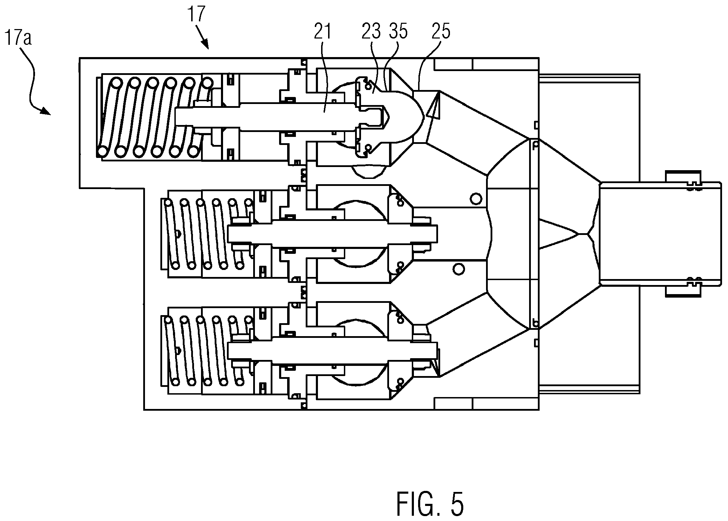

Fig. 5 zeigt eine Situation, in der sich ausgehend von Fig. 2 der Dichtkörper 21 noch weiter nach links bewegt hat. Der Zylinderabschnitt 35 des Dichtkörpers 21 ist nun nicht länger im zylindrischen Teilabschnitt des Abströmabschnitts 24 geführt.

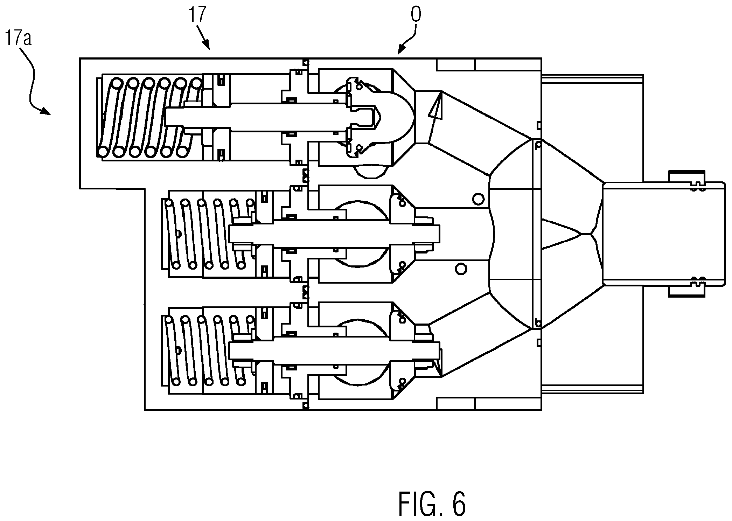

Fig. 6 zeigt das Ventil 17a der Ventilvorrichtung 17 in seiner vollständig geöffneten Offenstellung O. Der Querschnitt des Strömungskanals 20 ist nun maximal geöffnet.

Im Betrieb kann die Ventilvorrichtung 17 stufenweise oder kontinuierlich zwischen der Schließstellung S und der Offenstellung O bewegt werden. Eine stufenweise Verstellung kann durch getaktetes Zuführen definierter Fluidmengen von der Fluidquelle 38 erfolgen. Möglich ist es auch, die Ventilvorrichtung 17 derart anzusteuern, dass gezielt Zwischenstellungen zwischen der Schließstellung S und der Offenstellung O eingenommen werden, beispielweise die in Fig. 4 oder 5 gezeigten Zwischenstellungen.

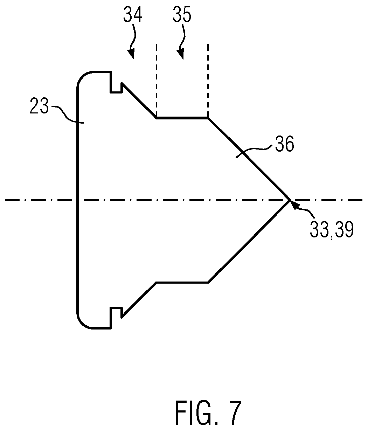

Fig. 7 zeigt eine zweite Ausführungsform eines Kopfes 23 eines Dichtkörpers 21. Im Unterschied zum ersten Ausführungsbeispiel ist die Regelkontur 36 hier kegelförmig ausgebildet; sie konvergiert hin zu einer Spitze bzw. einem Scheitel 39 am distalen Ende 33 des Kopfes 23.

Ausgehend von den erläuterten Ausführungsbeispielen können die Ventilvorrichtung 17 und das Verfahren in vielfacher Hinsicht abgewandelt werden. Einige der möglichen Varianten sind vorstehend bereits angedeutet worden. Möglich ist es beispielsweise, dass die Regelkontur 36 konkave statt konvexer oder kegelförmiger Außenflächen hat. Unter "zylindrisch" oder "Zylinderabschnitt" sind im Kontext der Erfindung auch Formen mit Abweichungen von einer reinen Zylinderform von bis zu ca. 5° zu verstehen.

## Patentansprüche

1. Ventilvorrichtung (17) mit einem Ventilkörper (19), einem den Ventilkörper (19) durchdringenden Strömungskanal (20) und einem im Strömungskanal (20) angeordneten Dichtkörper (21), wobei der Strömungskanal (20) ausgehend vom Dichtkörper (21) einen eine Axialrichtung (26) definierenden Abströmabschnitt (24) aufweist,
**dadurch gekennzeichnet, dass** der Dichtkörper (21) parallel zur Axialrichtung (26) verstellbar ist zwischen einer den Strömungskanal (20) abdichtenden Schließstellung (S) und einer den Strömungskanal (20) zumindest teilweise freigebenden Offenstellung (O), dass der Abströmabschnitt (24) des Strömungskanals (20) einen zumindest im Wesentlichen zylindrischen Teilabschnitt (25) aufweist, und
dass der Dichtkörper (21) einen Zylinderabschnitt (35) mit einer zumindest im Wesentlichen zylindrischen Form aufweist, der dazu konfiguriert ist, in der Schließstellung (S) des Dichtkörpers (21) in den zylindrischen Teilabschnitt (25) des Abströmabschnitts (24) hineinzuragen.

2. Ventilvorrichtung nach Anspruch 1, **dadurch gekennzeichnet, dass** der Abströmabschnitt (24) des Strömungskanals (20) einen kegelförmigen Dichtabschnitt (27) aufweist und der Dichtkörper (21) einen Kegelabschnitt (34) aufweist, der dazu konfiguriert ist, in der Schließstellung (S) des Dichtkörpers (21) am kegelförmigen Dichtabschnitt (27) des Strömungskanals (20) anzuliegen.

3. Ventilvorrichtung nach einem der vorangehenden Ansprüche, **dadurch gekennzeichnet, dass** der Dichtkörper (21) an einem distalen Ende (33) eine Regelkontur (36) aufweist.

4. Ventilvorrichtung nach Anspruch 3, **dadurch gekennzeichnet, dass** sich die Regelkontur (36) zwischen dem Zylinderabschnitt (34) und einem Scheitel (39) des Dichtkörpers (21) befindet.

5. Ventilvorrichtung nach einem der Ansprüche 3 oder 4, **dadurch gekennzeichnet, dass** die Regelkontur (36) vom Zylinderabschnitt (34) zu einem Scheitel (39) des Dichtkörpers (21) konvergiert.

6. Ventilvorrichtung nach einem der vorangehenden Ansprüche, **dadurch gekennzeichnet, dass** der Dichtkörper (21) eine kegelförmige oder abgerundete Regelkontur (36) aufweist.

7. Ventilvorrichtung nach einem der vorangehenden Ansprüche, **dadurch gekennzeichnet, dass** der Dichtkörper (21) in die Schließstellung (S) vorgespannt ist.

8. Ventilvorrichtung nach Anspruch 7, **dadurch gekennzeichnet, dass** eine Feder (30) zum Vorspannen des Dichtkörper (21) in die Schließstellung (S) vorgesehen ist.

9. Ventilvorrichtung nach einem der vorangehenden Ansprüche, **dadurch gekennzeichnet, dass** ein einfachwirkender Aktuator (31), vorzugsweise ein pneumatischer Aktuator (31), zum Bewegen des Dichtkörpers (21) in die Offenstellung (O) vorgesehen ist.

10. Verpackungsmaschine (1) mit einer Ventilvorrichtung (17) nach einem der vorangehenden Ansprüche.

11. Verfahren zum Regeln eines Drucks in einer Verpackungsmaschine (1) mittels einer Ventilvorrichtung (17), insbesondere mittels einer Ventilvorrichtung (17) nach einem der Ansprüche 1 bis 9, wobei die Ventilvorrichtung (17) einen Ventilkörper (19), einen den Ventilkörper (19) durchdringenden Strömungskanal (20) und einen im Strömungskanal (20) angeordneten Dichtkörper (21) umfasst, wobei der Strömungskanal (20) ausgehend vom Dichtkörper (21) einen eine Axialrichtung (26) definierenden Abströmabschnitt (24) aufweist, **gekennzeichnet durch** folgende Schritte:
Verstellen des Dichtkörpers (21) in Axialrichtung (26) aus einer Schließstellung (S) des Dichtkörpers (21) heraus, wobei ein Zylinderabschnitt (35) des Dichtkörpers (21) mit einer zumindest im Wesentlichen zylindrischen Form in einem zylindrischen Teilabschnitt (25) des Abströmabschnitts (24) geführt wird.

12. Verfahren nach Anspruch 11, **dadurch gekennzeichnet, dass** ein Kegelabschnitt (34) des Dichtkörpers (21), der in der Schließstellung (S) des Dichtkörpers (21) an einem kegelförmigen Dichtabschnitt (27) des Strömungskanals (20) anliegt, von dem Dichtabschnitt (27) des Strömungskanals (20) gelöst wird, während der Zylinderabschnitt (35) des Dichtkörpers (21) in dem zylindrischen Teilabschnitt (25) des Abströmabschnitts (24) geführt wird.

13. Verfahren nach Anspruch 11 oder 12, **dadurch gekennzeichnet, dass** eine mit dem Abströmabschnitt (24) fluidverbundene Vakuumquelle (16) einen Unterdruck im Abströmabschnitt (24) erzeugt.

14. Verfahren nach einem der Ansprüche 11 bis 13, **dadurch gekennzeichnet, dass** der Dichtkörper (21) schrittweise oder stufenweise zwischen seiner Schließstellung (S) und einer Offenstellung (O) bewegt wird.

15. Verfahren nach einem der Ansprüche 11 bis 14, **dadurch gekennzeichnet, dass**, ausgehend von der Schließstellung (S) des Dichtkörpers (21), der Zylinderabschnitt (35) des Dichtkörpers (21) über einen Bewegungsweg des Dichtkörpers (21) von wenigstens 2mm, vorzugsweise von wenigstens 5mm, in dem zylindrischen Teilabschnitt (25) des Abströmabschnitts (24) geführt wird.
